Europäisches Patentamt

European Patent Office

Office européen des brevets

(19)

(11) **EP 0 822 210 A1**

# (12) DEMANDE DE BREVET EUROPEEN

(43) Date de publication:
**04.02.1998 Bulletin 1998/06**

(51) Int. Cl.⁶: $C08G\ 18/80$, $C09D\ 175/04$

(21) Numéro de dépôt: 96401703.2

(22) Date de dépôt: **30.07.1996**

(84) Etats contractants désignés:
ES FR

(71) Demandeurs:
• **RHONE-POULENC CHIMIE**
  **92408 Courbevoie Cédex (FR)**
• **RESISA (RESINAS SINTETICAS SA)**
  **08470 Saint Celoni (ES)**

(72) Inventeurs:
• **Ardaud, Pierre**
  **69110 Sainte-Foy-Les-Lyon (FR)**

• **Williams, Francis John**
  **08450 Llinars del Valles (Barcelona) (ES)**

(74) Mandataire:
  **Ricalens, François et al**
  **RHONE-POULENC CHIMIE,**
  **Direction de la Propriéte Industrielle,**
  **25, quai Paul Doumer**
  **92408 Courbevoie Cédex (FR)**

(54) **Composition utile pour l'obtention de revêtement mat ou satiné, utilisation de cette composition et revêtement ainsi obtenu**

(57)     La présente invention a pour objet une composition.

Cette composition se définit en ce qu'elle comporte pour addition successive ou simultanée:

→  un isocyanate au moins partiellement masqué présentant une température de transition vitreuse (parfois désignée par l'abréviation anglo-saxonne Tg) d'au moins 20°C, avantageusement d'au moins 40°C) et un taux de libération à 120°C d'au plus 5%;

→  un polyol présentant les caractéristiques suivantes:

♦  une température de transition vitreuse (parfois désignée par l'abréviation anglo-saxonne Tg) au moins égale à environ 40°C, avantageusement au moins égale à environ 50°C,

♦  un indice d'hydroxyle au moins égal à environ 10 mg/g, avantageusement au moins égal à environ 15 mg/g,

♦  une masse moléculaire moyenne Mn au moins égale à environ 1000, avantageusement à 2000 g/mole.

Application à la peinture.

## Description

La présente invention a pour objet une nouvelle famille de compositions comportant des isocyanates masqués et des polyols. Elle concerne plus particulièrement des poudres, y compris des mélanges de poudres, et leur utilisation dans des revêtements au moyen de poudres.

Pour des raisons liées à la protection de l'environnement et à la sécurité du travail, on cherche à éliminer de plus en plus dans les techniques de revêtement, et notamment de peinture, l'utilisation des solvants. Plus particulièrement La diminution des C.O.V (Composés Organiques Volatils) est une préoccupation de plus en plus actuelle dans l'industrie des peintures et vernis. Dans ce but, l'évolution des produits vers de plus hauts extraits secs permet de diminuer les quantités de solvants nécessaires pour atteindre la viscosité d'application, et donc réduire les solvants évaporés lors du séchage du film de peinture.

Une autre alternative est l'utilisation de produits en phase aqueuse où l'eau a remplacé les solvants organiques comme agent véhiculant le liant organique. Toutefois, une faible quantité de solvants organiques est nécessaire à la mise en oeuvre et à la formation du film de peinture. De plus, ils engendrent des résidus solubles dans l'eau dont le traitement peut être délicat et coûteux.

Dans ce contexte, des techniques de revêtement au moyen de poudres se développent de plus en plus. Il convient ici de détailler un peu cette technique pour mieux appréhender la présente invention. La technique met en oeuvre un matériau pulvérulent de très grande finesse pour lequel l'air va jouer le rôle de vecteur.

En général, une charge électrostatique de plusieurs Kilovolts appliquée entre un pistolet et la pièce à peindre va permettre d'attirer et de retenir la poudre précurseur du revêtement, poudre qui sera projetée par le pistolet d'application.

Une cuisson de la pièce entre 150 et 200°C permet alors la fusion, l'étalement puis la réticulation de la poudre de peinture (la peinture est considérée comme le paradigme des revêtements) afin d'obtenir une couche uniforme et homogène du revêtement.

Cette technique est non polluante et présente un rendement d'application voisin de 100% grâce à la possibilité de recyclage de la poudre non utilisée.

Parmi les familles de produits qui peuvent être mises en oeuvre dans ce domaine il convient de mentionner celles qui font l'objet du rappel ci-après :

La majorité du marché est occupée par les peintures poudres dites "hybrides Epoxy-Polyester", suivies des Polyesters et des Polyuréthannes, puis des poudres dites "Epoxy".

Pour obtenir une tenue en extérieur de qualité (notamment vis-à-vis du rayonnement U.V. et de l'humidité), il est impératif d'utiliser les revêtements à base de TGIC-Polyester ou de Polyuréthanne qui, seuls permettent d'atteindre les performances requises.

Les poudres de revêtement peuvent présenter plusieurs aspects de finition (aspect de surface, couleur, brillance, ...).

La technique utilisée pour atteindre ces effets est différente pour les peintures conventionnelles liquides et les poudres.

Lorsque l'on désire modifier la brillance, l'ajout de charges comme des silices, carbonates de calcium ou de barytes permet de réduire la brillance dans une gamme de 50 à 90%, mais des finitions mates ne peuvent pas être obtenues.

Dans la présente invention, on définit comme système mat ou satiné un revêtement durci, lisse ou structuré appliqué sur un support métallique et présentant un coefficient de réflexion au plus égal à 50% sous un angle d'incidence de 60°C.

Les systèmes toutefois les plus difficiles à obtenir correspondent à des revêtements tranchement mats, c'est-à-dire présentant une brillance inférieure à 30%, pour un angle incident de 60° ou à 40% selon un angle incident de 85°.

Une des techniques les plus utilisées afin d'obtenir des finitions mates consiste en la combinaison de composés de réactivités très différentes.

Ceci est atteint par le mélange de poudres de peinture possédant des temps de gel court et long. De cette façon, une hétérogénéité microscopique sera obtenue en surface du revêtement, créant ainsi l'effet mat désiré.

D'autres techniques permettent de réduire la brillance des peintures. Elles consistent à utiliser des additifs ou des cires, mais d'une part, elles ne suffisent pas à elles seules et d'autre part lorsqu'elles sont utilisées seules, elles présentent en général des problèmes de reproductibilité et/ou des propriétés mécaniques vraiment insuffisantes, et/ou ne permettent pas d'être utilisées à l'extérieur à cause de leur jaunissement ou de la détérioration du film du fait des intempéries.

Le système le plus utilisé pour l'extérieur est celui connu sous le nom de mélange à sec (parfois désigné par le terme anglo-saxon de "dry-blend"), selon lequel on obtient une faible brillance en malaxant des peintures en poudre extrudées et broyées séparément présentant une réactivité très différente. Outre le fait que ce système prenne du temps et qu'il implique la fabrication (extrusion, broyage, malaxage) de plusieurs peintures, il présente une uniformité réduite du degré de brillance souhaité, ce qui demande des étapes plus nombreuses qu'usuelles et implique des coûts supplémentaires.

Il faut en outre que les composés issus des réactions de réticulation ne soient délétères ni pour la santé humaine ou animale, ni pour l'environnement.

Pour plus de détails sur les techniques de peinture en poudre, on peut se référer aux ouvrages suivants:

→ P. GRANDOU et P. PASTOUR : PEINTURES ET VERNIS :

- I les constituants
- II techniques et industries ; édition Hermann ;

→ R LAMBOURNE :

Paints and Surface Coatings. theory and practice ; Edition Halsted press ;

→ POWDER COATING. THE COMPLETE FINISHER HAND BOOK ; the

Powder coating institute ;

→ MYERS and LONG :

TREATISE ON COATINGS, 5 VOLUMES ; Edition Marcel DEKKER.

C'est pourquoi un des buts de la présente invention est de fournir une composition qui permette d'obtenir des revêtements par la technique dite des poudres.

Un des buts de la présente invention est de fournir une composition qui permette d'obtenir des revêtements de bonne résistance aux intempéries.

Un des buts de la présente invention est de fournir une composition qui permette d'obtenir des revêtements mats et/ou satinés.

Un des buts de la présente invention est de fournir une composition du type précédent qui soit de mise en oeuvre aisée.

Ces buts et d'autres qui apparaîtront par la suite au moyen d'une composition qui comporte pour addition successive ou simultanée :

→ un isocyanate au moins partiellement masqué présentant une température de transition vitreuse (parfois désignée par l'abréviation anglo-saxonne Tg) d'au moins 20°C, avantageusement d'au moins 40°C) et un taux de libération (vis à vis de l'agent masquant) à 120°C d'au plus 5% ;
→ un polyol présentant les caractéristiques suivantes :

♦ une température de transition vitreuse (parfois désignée par l'abréviation anglo-saxonne Tg) au moins égal à environ 40°C, avantageusement au moins égal à environ 50°C ;
♦ un indice d'hydroxyle au moins égal à environ 10 mg/g, avantageusement au moins égal à environ 15 mg/g ;
♦ une masse moléculaire moyenne Mn au mois égale à environ 1000, avantageusement à 2000 g/ mole.

(dans la présente description le terme "environ" est employé pour mettre en exergue le fait que la valeur est arrondie et que, lorsque le, ou les, chiffres les plus à droite d'un nombre sont des zéros, ces zéros sont des zéros de position et non des chiffres significatifs, sauf bien entendu s'il en est précisé autrement).

Selon la présente invention, l'isocyanate est avantageusement masqué par un groupe masquant portant au moins une fonction ester.

Il est souhaitable que dans la structure du ou des isocyanates(s), la partie du squelette reliant deux fonctions isocyanates comporte un enchaînement polyméthylène $(CH_2)\pi$ où $\pi$ représente un entier de deux à 10, avantageusement de 4 à 8.

Le taux de libération est quantifié par le test à l'octanol (voir infra).

Selon la présente invention, l'isocyanate masqué, pur ou en mélange, est issu d'un polyisocyanate, c'est-à-dire possédant au moins deux fonctions isocyanates, avantageusement plus de deux (possibilité de valeurs fractionnaires puisqu'il s'agit en général de mélange d'oligomères plus ou moins condensés), lequel est lui-même le plus souvent issu d'une précondensation ou d'une prépolymérisation de diisocyanate unitaire.

D'une manière générale la masse moléculaire moyenne de ces prépolymères ou de ces précondensats est au plus égale à 2000 (un chiffre significatif), plus couramment à 1000 (un chiffre significatif de préférence deux).

Ainsi, parmi les polyisocyanates utilisés pour l'invention, on peut citer ceux du type biuret et ceux dont la réaction de di- ou trimérisation a conduit à des cycles à quatre, cinq ou six chaînons. Parmi les cycles à six on peut citer les cycles isocyanuriques issus d'une homo- ou d'une hétéro-trimèrisation de divers diisocyanates seuls, avec d'autre isocyanate(s) [mono-, di--, ou polyisocyanate(s)] ou avec du gaz carbonique (ou bioxyde de carbone), dans ce cas on remplace un azote du cycle isocyanurique par un oxygène.

Les polyisocyanates préférés sont ceux qui présentent au moins une fonction isocyanate aliphatique. En d'autres termes, au moins une fonction isocyanate masquée selon l'invention est reliée au squelette par l'intermédiaire d'un carbone de type $sp^3$ portant avantageusement un atome d'hydrogène, de préférence deux.

Les agents conduisant au groupe masquant sont avantageusement choisis parmi qui ceux qui sont issus de la condensation d'un dérivé aromatique hydroxylé sur le noyau et portant une fonction choisie parmi les fonctions nitriles, et de préférence carbonyles avec un isocyanate.

Il convient de choisir parmi les membres de cette famille ceux pour lesquels il est possible de déterminer un point de fusion apparent, cette mesure étant réalisée à température ambiante (20°C). Ce point de fusion doit être au moins égale à 30°C (un chiffre significatif) avantageusement à 50°C.

Il est préférable de choisir parmi ceux de la formule (I) :

$$Ar(R)_n(Y\text{-}Z)_m(OH)_p \hspace{4cm} (I)$$

où Ar est un reste aromatique sur lequel est greffé n substituants R, m fonctions polaires Z choisies parmi les nitriles et les groupements carbonyles, et p fonctions hydroxyles.

Les valeurs de n, m et p sont telles que la somme $n + m + p$ soit au plus égale au nombre de sommets substituables, avantageusement p est au plus égal à 2, de préférence il est égal à 1.

Avantageusement m est au plus égal à deux, de préférence m est égal à 1.

Avantageusement n est au plus égal à 3 de préférence choisi parmi zéro, un, et deux, plus préférentiellement égal à zéro.

R Représente des substituants indifférents pour la réaction de masquage et en général correspond à des chaînes hydrocarbonées, le plus souvent des chaînes alcoyles au sens étymologique du terme, à savoir un alcool auquel on a enlevé sa fonction hydroxyle.

Deux substituants vicinaux R peuvent être reliés entre eux pour former un cycle qui peut être aromatique par exemple.

Z est avantageusement choisi parmi les groupements présentant une fonction carbonyle. Parmi ces fonctions, il convient de citer les fonctions alcoxycarbonyles (ou en d'autres termes les fonctions esters), la fonction amide, la fonction cétone avec la condition préférentielle qu'il n'y ait pas d'hydrogène acide [en d'autres termes la fonction n'est avantageusement pas porteuse d'hydrogène ou si elle en porte le pKa correspondant est au moins égal à environ 20 (un chiffre significatif de préférence deux) plus préférentiellement au moins égal à environ 25] en $\alpha$ de la fonction carbonyle (ester, cétone ou amide). Ainsi les amides (y compris lactame, voire urée) préférés sont avantageusement substitués de préférence suffisamment pour qu'il n'y ait pas d'hydrogène sur l'azote de la fonction amide ou de manière qu'il n'y ait pas d'hydrogène réactif.

Où Y est choisi parmi les groupements divalents.

Avantageusement -O-, -S-, NR'-,-CR'R''- avec R' et R'' choisis parmi les radicaux hydrocarbonés, avantageusement alcoyles, de 1 à 6 atomes de carbone, avantageusement de 1 à 4, de préférence méthyle, plus préférentiellement hydrogène ; et de préférence Y représente une liaison simple.

Il est préférable que la, ou les fonctions polaires Z (en général choisies parmi la fonction nitrile et/ou les fonctions carbonyles) ne soient pas vicinales du groupe Z comme par exemple dans l'acide salicylique.

Le reste aromatique Ar est constitué d'un ou plusieurs noyaux avantageusement condensés, hétéro- ou homocycliques. Il est préférable que Ar ne comporte pas plus de deux noyaux, et de préférence pas plus d'un noyau.

Le reste aromatique Ar peut être constitué d'un ou plusieurs noyaux hétéro- ou homocycliques, le plus souvent homocyclique en raison de leur facilité d'accès. Il convient toutefois de souligner l'intérêt des hétérocycles à 6 chaînons qui présentent une température de libération très inférieure à celle des homocycles correspondants.

Il est souhaitable que le nombre total de carbones du dérivé aromatique hydroxylé sur le noyau soit au plus égal à 20, de préférence à 10 (un chiffre significatif).

Ce noyau est avantageusement à 6 chaînons, les chaînons étant constitués de carbone ou d'azote avec le nombre de substituants nécessaire à la valence de ces atomes.

Parmi les acides donnant les résultats les plus satisfaisants, il convient de citer les acides greffés sur un noyau benzénique ou sur des noyaux pyridiniques. Ainsi, les acides métahydroxy-, et surtout parahydroxybenzoïques, donnent de bons résultats.

Comme cela a déjà été déjà mentionné selon la présente invention, il est préférable que le point de tusion du composé ou du mélange de composés obtenu présente un point de tusion apparent au moins égal à 30°C, de préférence 50°C.

Il est également préférable que la température de transition vitreuse soit au moins égale à 20°C avantageusement à 40°C.

Il est préférable de choisir les composés selon la présente invention de manière qu'ils réagissent complètement avec un alcool primaire à 250°C en moins d'une demi-heure.

On considère que la réaction est complète si elle est réalisée à 90% ou plus.

Les isocyanates pour lesquels l'invention est la plus intéressante sont ceux dont l'atome d'azote est lié à un carbone d'hybridation sp$^3$, et plus particulièrement aliphatiques, et notamment aux polyméthylènes diisocyanates et leurs différents dérivés de condensation (biuret, etc...) et de di- et de "trimérisation".

Selon la présente invention, Il est souhaitable et parfois nécessaire que le pourcentage de fonction isocyanate libre résiduelle soit au plus égal à 5%, avantageusement à 3%, de préférence à 1%. Les points de fusion ou de transition vitreuse les plus élevés sont obtenus avec des pourcentages ne dépassant pas 0,5%. Les teneurs en dérivé aromatique hydroxylé sur le noyau sont également avantageusement faible c'est-à-dire au plus égales à 5%, avantageusement à 3%, de préférence à 1%.

Si l'on se réfère aux composés utilisables comme polyols de la composition selon l'invention, ceux qui permettent d'obtenir le plus aisément des peintures ou des vernis en poudre de faible brillance sont des résines acryliques hydroxylées et/ou polyesters saturés ou insaturés hydroxylés, linéaires ou ramifiés, présentant un poids moléculaire approprié, et susceptibles d'être réticulées par une réaction avec un prépolymère d'isocyanate (c'est-à-dire un isocyanate au moins partiellement masqué selon l'invention).

Ledit prépolymère est fourni avec des fonctions actives masquées (ou bloquées) et il est thermiquement activé par la libération de l'agent bloquant, en échangeant les groupes isocyanates qui réagissent avec les groupes hydroxyles du liant, en présence ou en l'absence de catalyseurs.

Ce système permet d'obtenir des peintures en poudre présentant une viscosité en fusion appropriée et une température de transition vitreuse supérieure à 40°C, entraînant une stabilité chimique et physique lors du stockage.

L'éventuelle fonctionnalité du carboxyle, qui définit le poids moléculaire du polymère, permet ainsi une double réticulation avec des résines époxy aromatiques ou aliphatiques et/ou des hydroxyalkylamides.

Ledit excès de groupes acides est déterminé par l'indice d'acidité de celui-ci, exprimé en milligrammes d'hydroxyde de potassium nécessaires pour neutraliser l'acidité libre d'un gramme de polyol (parfois désigné par "résine").

L'indice d'hydroxyle correspond aux milligrammes d'hydroxyde de potassium nécessaires par gramme de résine pour neutraliser l'excès d'acide acétique libéré lors de 'acétylation (par l'anhydride acétique) du polymère hydroxylé. Pour plus de détail on peut se rapporter à la norme ASTM-E222.

L'indice d'hydroxyle du polymère peut varier entre 10 et 350 mg. KOH/g, de préférence entre 15 et 80, l'indice d'acidité étant inférieur à 20 mg. KOH/g, compris de préférence entre 3 et 15 mg. KOH/g.

Le poids moléculaire en chiffre, $\overline{M}n$ , du liant ou polymère hydroxylé de la présente invention varie entre 2000 et 15000 g/mol, son degré de ramification (c'est-à-dire le nombre moyen de fonction OH libre par molécule) étant compris entre 2 et 4. Le poids moléculaire est déterminé par chromatographie par perméation du gel (GPC).

Dans le cas de l'utilisation de polyesters hydroxylés pour la présente invention, on emploie le produit de l'estérification d'un ou plusieurs acides ou anhydrides di- ou polycarboxyliques, aliphatiques, aromatiques ou cycloaliphatiques ou leurs esters méthyliques, qui comptent 2 à 36 atomes de carbone.

Par exemple, on peut citer l'acide adipique, l'acide succinique, l'acide sébacique, l'acide subérique, l'acide azélaïque, l'acide décanedicarboxylique, l'acide glutarique, l'acide téréphtalique, l'acide isophtalique, l'acide ou l'anhydride phtalique, l'acide naphtalènedicarboxylique, l'acide ou l'anhydride hexahydrophtalique, l'acide 1,4-cyclohexanedicarboxylique, des acides gras dimérisés, l'anhydride triméthylique.

Le poids moléculaire du polymère peut être réglé par l'ajout d'acides monocarboxyliques ou de leurs esters méthyliques, aliphatiques ou aromatiques ayant 2 à 18 atomes de carbone.

Le pourcentage du ou des acides(s) ou anhydride(s) décrit(s) précédemment dans l'ensemble du polymère varie entre 20 et 70%, de préférence 30 et 60%, pris individuellement ou mélangés.

Si le polymère de la présente invention est insaturé, on utilise des acides ou anhydrides di- ou polycarboxyliques insaturés en oléfines comme l'acide ou l'anhydride maléique, l'acide ou l'anhydride tétrahydrophtalique, l'acide fumarique, l'acide ou l'anhydride hexachloroendométhylènetétrahydrophtalique, l'acide méthylmaléique, l'acide itaconique ou des dérivés du dicyclopentadiène, méthylmaléique, de l'acide itaconique, maléique ou fumarique.

Parmi les alcools polyhydroxylés utiles pour la synthèse du polyester figurent: l'éthylèneglycol, le 1,2- ou 1,3-propylèneglycol, le 2- méthylpropanediol, le diéthylèneglycol, le dipropylèneglycol, le 1-4-butanediol, le 2,3-butylèneglycol, le 1,6-hexanediol, le 1,5-pentanediol, le néopentylglycol, le cyclohexanediméthanol, le triéthylèneglycol, l'hydroxypivalate de néopentylglycol, le tétraéthylèneglycol, le polyéthylèneglycol, le propylèneglycol, le dibutylèneglycol ou le polyéthylèneglycol, le triméthylpentanediol, le butyléthylpropanediol, la glycérine, le triméthylolpropane, l'hexanetriol, le pentaérytritol, le sorbitol, le triméthyloléthane, le tris(2-hydroxyéthyle)isocyanurate. Le pourcentage de ceux-ci peut varier entre 10 et 60%, de préférence entre 10 et 50%.

Pour la préparation des polyesters et notamment lors de la création ou de la transformation de la liaison ester il est indiqué d'utiliser des catalyseurs connus "per se" pour l'estérification ; ces catalyseurs qui peuvent se retrouver dans la composition finale, peuvent être utilisés seuls ou en mélange. Parmi les catalyseurs utilisables dans le cadre de la présente invention, Il convient de citer plus particulièrement ceux qui sont a base d'acide protique (surtout ceux qui sont organiques) ou de Lewis, avantageusement organique. Plus spécifiquement parmi les acides organiques protiques on peut citer les acides sulfoniques, dont les plus courants sont les acides paratoluène sulfonique, et méthane sulfonique. Parmi les acides de Lewis, il convient de citer ceux à base de titane tels que le tétrachlorure de titane, titanate de tétra n-butyle et d'isopropyle, tétrakis(2-éthylhexyl)titanate, acétylacétonate de titane, titanate de stéaryle, titanate de nonyle, titanate de cétyle, ceux à base de vanadium tels que vanadate d'isopropyle ou de n butyle, ceux à base de Zirconium tels que le tétrachlorure de Zirconium, le zirconate de n propyle ou de n butyle, ceux à base d'étain tels que les chlorures d'étain anhydres ou hydratés, oxyde de dibutylétain, octoate d'étain, hexanoate de butylétain, oxalate d'étain, oxyde de monobutylétain, dihydroxyde de monobutylchloroétain, dilaurate de dibutylétain, diacétate de dibutylétain, tris-(2-éthyl héxanoate) de monobutylétain.

L'utilisation des catalyseurs ci-dessus est particulièrement intéressante dans le cas des polyesters saturés hydroxylés, et ce en pourcentage masse avantageusement compris entre 1/2 et 2% (en masse) par rapport à l'ester hydroxylé saturé.

L'adjonction des composés des types précédents permet notamment de réduire les temps de fabrication et l'émission de composé volatile et l'optimisation de la coloration finale des ces polyols particulièrement bien adapté à la présente invention.

Dans le cas où l'on part d'ester méthylique (d'acides di- ou polycarboxyliques), il est très souhaitable d'utiliser ceux des catalyseurs ci-dessus qui sont connus pour bien catalyser la transestérification ou d'en introduire d'autres connus pour ce faire. Par exemple les carboxylates de zinc, le trioxyde d'antimoine ou tout autre catalyseur connu de l'homme de métier dans le domaine de la technique de la condensation. Les quantités a utiliser sont avantageusement entre 1/2 et 1% (en masse) de la charge initiale.

Pour améliorer ou protéger le polymère de la coloration pendant le processus d'estérification, outre le fait de travailler en atmosphère inerte, il est préférable d'ajouter des additifs antioxydants tels que le phosphite de triphényle, le phosphite de tris nonylphényle, le diphosphite de stéarylpenta érythritol, ou leurs équivalents. De préférence on utilise ces composés en quantité au moins égale à 5 pour mille et au plus égale à 15 pour mille.

Pour obtenir le polyester mentionné ci-dessus, on utilise les techniques en elles-mêmes connues. On peut citer les conditions réactionnelles usuelles à savoir :

- température finale comprise entre environ 200°C et 260°C,
- pression absolue comprise entre 5 HectoPascals et 800 kiloPascals.

Il convient de contrôler, l'indice d'acidité, l'indice d'hydroxyle, on ajuste l'alcalinité au point permettant d'obtenir les meilleures propriétés de recouvrement du polyuréthanne. Alors, et avant la décharge, en principe dans une enceinte réfrigérée, on procède à l'incorporation des catalyseurs, antioxydants, et tout additif requis par l'application finale.

Les polyesters utilisés pour la présente invention présentent une température de transition vitreuse (Tg) comprise entre 40 et 80°C, de préférence entre 50 et 70°C, afin de conférer au système la stabilité nécessaire lors du stockage. Il est possible d'utiliser des mélanges de polyesters amorphes et cristallins, dont les proportions appropriées doivent permettre une bonne stabilité, aussi bien chimique que physique. La Tg du polymère est déterminée par calorimétrie par analyse différentielle (DSC).

Dans le cas où on utilise des polymères acryliques hydroxylés, pour la présente invention, on emploie un seul liant, la Tg étant comprise entre 40 et 100°C, ou bien des mélanges comprenant 0 à 30% d'un polymère acrylique, la Tg étant comprise entre -20 et 50°C, et 70 et 100% d'un polymère acrylique hydroxylé, la Tg étant comprise entre 40 et 100°C. Avec ledit mélange, le système peut être traité facilement et présente une bonne stabilité lors du stockage ainsi que de bonnes propriétés chimiques et mécaniques.

Les polymères acryliques hydroxylés peuvent être obtenus en faisant réagir des monomères alpha, bêta insaturés en éthylène, en particulier des monomères vinyles aromatiques et des esters d'acides carboxyliques alpha, bêta insaturés en éthylène. On peut citer, par exemple, le styrène et ses dérivés, tels le méthylstyrène ou le chlorostyrène ; dans le cas de produits d'extérieur, ils sont présents dans des quantités comprises entre 5 et 54%, de préférence entre 10 et 25% de l'ensemble des monomères. Des quantités inférieures à 5% peuvent affecter la résistance à la corrosion.

Parmi les esters d'acides alpha, bêta insaturés en éthylène, on peut citer les esters d'acide acrylique et méthacrylique comme l'acrylate de méthyle, l'acrylate d'éthyle, l'acrylate de butyle, l'acrylate de 2-éthylhexyle, l'acrylate de dodécyle, le méthacrylate de méthyle, le méthacrylate d'éthyle, le méthacrylate de butyle, le méthacrylate de 2-éthylhexyle, le méthacrylate laurique. De préférence, les esters d'insaturés sont présents dans une quantité comprise entre 5 et 8%, et correspondent à un mélange d'esters d'alcoyle ayant 1 à 3 atomes de carbone et 4 à 20 atomes de carbones, par exemple un mélange de méthacrylate de méthyle et d'acrylate de butyle.

La fonctionnalité hydroxyle du polymère acrylique est conférée par la copolymérisation de monomères ayant des groupes hydroxyles, comme le méthylacrylate d'hydroxyéthyle et l'acrylate, l'acrylate d'hydroxypropyle et le méthacrylate dans des quantités comprises entre 5 et 80%, ce pourcentage, portant sur l'ensemble des monomères, étant nécessaire pour obtenir l'indice d'hydroxyle indiqué.

Le polymère acrylique peut présenter un certain indice d'acidité, normalement inférieur à 15 provenant de l'ajout d'acide acrylique, méthacrylique, itaconique ou fumarique et/ou d'acide ou anhydride maléique.

Pour préparer lesdits polymères acryliques, les différents monomères sont mélangés et on les fait réagir par polymérisation de radicaux libres. Parmi les initiateurs pouvant être utilisés, on peut citer notamment le peroxyde de benzoyle, l'hydropéroxyde de tertiobutyle, le péroxyde de ditertiobutyle, l'azo-bis-isobutyronitrile. Pour régler le poids moléculaire, on peut utiliser des agents de transfert de chaîne comme l'acide mercaptopropionique, dodécyle et de mercaptan laurique. La polymérisation est effectuée en solution, en utilisant un solvant dans lequel les monomères sont solubles comme le toluène, le xylène, l'acétate de butyle, l'acétate de propylèneglycolméthyléther, entre autres. Une lois la polymérisation achevée, le mélange de réaction se volatilise, sous vide, pour éliminer le solvant organique et récupérer le polymère solide. La teneur résiduelle en solvants ou composés volatils doit être inférieure à 0,5%.

Lorsque l'on utilise les polymères acryliques hydroxylés répondant au conditions décrites ci-dessus, on obtient, certes, une réticulation satisfaisante avec un prépolymère à fonctions isocyanates masquées selon la présente invention., avec la matité désirée, mais les propriétés mécaniques restent insuffisantes pour les usages soumis aux intempéries. Aussi est-il préféré d'utiliser les systèmes polyesters saturés et polyisocyanates.

L'indice d'acidité que présente le polymère de la présente invention permet de faire réagir les groupes carboxyles avec des polyépoxydes aliphatiques, aromatiques et/ou bêta-hydroxyalkylamides, et on obtient ainsi une réticulation double.

Le liant de la présente invention permet d'obtenir des peintures mates (faible brillance), lisses, structurées, texturées et d'autres effets comme l'effet de grenaille, en utilisant les additifs, charges, pigments et procédés de fabrication connus par les personnes familières avec la fabrication de revêtements en poudre.

Dans la formulation de peintures, on doit trouver les pigments appropriés qui permettent d'obtenir la couleur souhaitée, ceux-ci pouvant varier entre 1 et 50% en poids de la totalité de la peinture en poudre. On peut ainsi utiliser des charges dans la formulation dans des quantités comprises entre 5 et 40%.

La peinture ou les vernis selon la présente invention peuvent contenir les divers types d'additifs, en eux-mêmes connus, tels qu'agents dégazants, de nivellement, antioxydants et absorbant les U.V. (anti U.V.). Ils peuvent également contenir les divers ajuvants de matité connus pour améliorer cette dernière.

Ainsi, comme agent dégazant recommandé on peut citer la benzoïne, notamment présente en quantité comprise entre 0,5 et 3%, laquelle permet aux composés volatils de se libérer du film pendant le durcissement et d'empêcher des défauts comme la formation de cratères ou de piqûres.

Les additifs d'étalement recommandés sont les polymères acryliques, les polymères fluorés ou les siloxanes polymères, dans des quantités comprises entre 0,5 et 5% ajoutés directement, en tant que "master-batch" (mélange maître) dans des polymères appropriés ou absorbés dans de la silice.

Pour améliorer la tenue en extérieur, la résistance à la surcuisson ou au durcissement dans des fours à injection directe de gaz, on recommande d'ajouter aux formulations des compositions absorbant les UV et/ou antioxydantes du type primaire et/ou secondaire, du type phénolique ou des phosphites d'alcoyle/aryle. Lesdits additifs peuvent être présents dans la formulation dans une quantité comprise entre 0,5 et 2% de l'ensemble de la peinture.

Pour réduire la température de durcissement (de réticulation), on peut ajouter à la formulation des catalyseurs de formation d'uréthanne comme le DBTDL (dibutyldilaurate d'étain II), ajoutés directement dans le prémalaxage ou en tant que mélange maître.

Les peintures en poudre mate, qui font l'objet de la présente invention, peuvent être fabriquées en malaxant en fusion les composés de la formulation. D'abord, on les prémalaxe dans un malaxeur puis on les lait fondre, on les homogénéise et les disperse dans une extrudeuse à une ou plusieurs vis, à une température comprise entre 80 et 130°C. On laisse refroidir la matière extrudée obtenue, on la passe dans un moulin jusqu'à l'obtention d'une peinture présentant la granulométrie souhaitée (en général, $d_{90}$ est au plus égale à environ 200 micromètres avantageusement à 100 micromètres (deux chiffres significatifs) et $d_{10}$ au moins égale à environ 20 micromètres avantageusement à environ 50 micromètres) en vue de son application sur des supports métalliques comme l'acier, l'aluminium ou d'autres alliages, le verre, le plastique, le bois.

Le rapport entre le(s) polyol(s) et le(s) isocyanate(s) est défini par la stoechiométrie de déblocage. On choisit en général la quantité stoechiométriquement nécessaire d'isocyanate pour réagir avec la totalité des hydroxyles libres, avec une tolérance de 20%, avantageusement de 10%, de préférence de 5%. Comme il est préférable d'être en excès d'isocyanate, on préfère les fourchettes légèrement décalées. En d'autres termes, la quantité d'isocyanate à ajouter est avantageusement au moins égale à environ 90% et au plus égale à environ 120% de la quantité stoechiométrique ; de préférence elle est au moins égale à 95% et au plus égale à environ 110% de la quantité stoechiométrique ; l'intervalle le plus fréquent et donc le plus souhaitable étant au moins égal à 100% (trois chiffres significatifs) et au plus égale à 105% de la quantité stoechiométrique.

La poudre obtenue peut être appliquée avec un pistolet électrostatique ou par un lit fluide. L'application préférée de la présente invention est celle effectuée avec le pistolet électrostatique à charge et à effet Corona ou par frottement (triboélectrique).

Le substrat sur lequel la peinture est appliquée, principalement de l'acier, l'aluminium, peut ou non être préchauffé avant l'application. Une fois appliquée, la poudre est durcie au four pendant 10 à 30 minutes à une température comprise entre 140 et 220°C selon que le système est ou non catalysé.

La présente invention sera mieux comprise à l'aide des exemples illustratifs suivants sur lesquels sont comparés les différents systèmes de peinture mate pour l'extérieur/l'intérieur, afin d'indiquer les points favorables du système proposé.

## TEST A L'OCTANOL - définitions

température de "libération" (ou de "déblocage")
: c'est la température la plus faible à laquelle l'agent de masquage de l'isocyanate masqué est déplacé à hauteur de 9/10 (arrondi mathématique) par un monoalcool primaire (l'alcool primaire est en général l'octanol).
durée de vie au stockage
: Pour s'assurer, une bonne durée de vie au stockage, il est préférable de choisir des fonctions isocyanates masquées dont le test à l'octanol montre une "libération" à 80°C, avantageusement à 90°C, au plus égale à 90%.
Avancement de la réaction
: On considère que la réaction est complète si elle est réalisée à plus de 90%.

## MODE OPERATOIRE

Dans un tube, type SOHOTT, avec agitation magnétique, on charge environ 5 mmol en équivalent NCO masqué protégé à évaluer.

On ajoute 2,5 à 3 ml de dichloro-1,2 benzène (solvant) l'équivalent d'octanol-1 (5 mmol, soit 0,61 g et éventuellement avec le catalyseur à tester avec le groupe masquant).

Le milieu réactionnel est ensuite porté à la température testée. On chauffe alors pendant 6 h à la température testée, de façon à débloquer et ainsi rendre réactives les fonctions isocyanates. La réaction terminée, le solvant est éliminé par distillation sous vide et le résidu est analysé en RMN, Masse et infra rouge. A partir de ces données, on évalue le pourcentage de fonction isocyanate masquée condensée avec l'octanol-1.

## PRODUITS UTILISES

Les produits utilisés dans les exemples ci-après sont souvent désignés par leur dénomination commerciale. Ces produits sont décrits dans des fiches techniques dont on trouvera les références dans le tableau suivant:

| nom commercial | mise sur le marché par | type de produit chimique | référence de fiche technique | date de la publication |
|---|---|---|---|---|
| PT810 | CIBA GEIGY | glycidil isocyanurate | 37236/f 750.313:15 | |
| BYK- 360 P | BYK Chemie GmbH | polyacrylate adsorbé sur silice | SM 18 | juin 1993 |
| Ceraflour 961 | BYK CERA | cire de polyéthylène micronisée | XM 961 | septembre 1995 |
| DT 3329-1 | CIBA GEIGY | cire | | avril 1994 |
| XB 4957 | CIBA GEIGY | agent matifiant | Best. Nr 93118 | novembre 1993 |
| Primid XL 552 | EMS | durcisseur hydroxyalkyamide | 7.2.1 | |
| accélérateur DT 3126 | CIBAGEIGY | | 38037/F 900.110/20 | janvier 1990 |
| REAFREE 3300 | RESISA | polyester saturé hydroxylé | 3300/950119 | janvier 1996 |
| REAFREE 7000 | RESISA | polyester saturé hydroxylé | 7000/960725 | juillet 1996 |
| REAFREE 4001 | RESISA | polyester saturé carboxylé | 4001/960329 | mars 1996 |
| REAFREE 4401 | RESISA | polyester saturé carboxylé | 107370/960221 | février 1996 |
| REAFREE 8580 | RESISA | polyester saturé carboxylé | 107240/930309 | mars 1993 |
| REAFREE 8180 | RESISA | polyester saturé carboxylé | 8180/960521 | mai 1996 |

## EXEMPLE A

Deux formulations de peinture pigmentée blanche en poudre résistante à l'extérieur utilisant des polyesters de réactivité et de rapport avec la TGIC différentes ont été obtenues comme suit:

| constituants | nom commercial | composition poudre N°1 | composition poudre N°2 |
|---|---|---|---|
| | | Parties en masse (grammes) | |
| Polyester carboxylé 90/10 | REAFREE 4001 | 540,0 | - |
| Polyester-carboxylé 96/4 | REAFREE 4401 | - | 576,0 |
| Triglycidylisocyanurate | Araldite PT810 (Ciba) | 60,0 | 24,0 |
| Benzoïne | | 3,0 | 3,0 |
| Agent d'étalement | Byk 360P de Byk-Chemie | 9,0 | 9,0 |
| Bioxyde de Titane | RL 60 de Rhône Poulenc | 300,0 | 300,0 |

Les composants de chacune des peintures sont malaxés dans un malaxeur puis homogénéisés séparément et par fusion dans une extrudeuse à une seule vis du type Büss PCS-30, à une température comprise entre 80 et 120°C. On laisse refroidir la matière extrudée et on l'écaille sur des rouleaux de refroidissement, elle est broyée et classée selon la forme souhaitée. Une fois les deux peintures obtenues, on malaxe 1/1 dans un malaxeur à haute intensité. Une fois l'homogénéisation effectuée, on applique de façon électrostatique la poudre résultant du mélange sur des plaques en acier ou en aluminium. On les fait durcir 12 à 15 minutes à 200°C, température du substrat. Une fois le durcissement effectué, on observe la brillance (mate) des échantillons appliqués. Sur le tableau 1 sont résumés les résultats et les propriétés. Le problème dudit système est qu'il nécessite la fabrication de deux peintures et le mélange de poudres broyées (dry-blend). Ce système présente l'inconvénient d'une reproductibilité faible et de petites variations impliquent des variations du degré de brillance.

**EXEMPLE B**

Peinture pigmentée blanche résistant à l'extérieur, base Primid. Système dry-blend, mélange des peintures 1 et 2 comme dans l'exemple A.

| constituants | nom commercial | composition poudre N°1 | composition poudre N°2 |
|---|---|---|---|
| | | Parties en masse (grammes) | |
| Polyester carboxylé 95/5 | REAFREE 8580 | 570,0 | - |
| Polyester carboxylé 89/11 | REAFREE 8180 | - | 540,0 |
| Réticulant hydroxyalkylamide | Primid XL-552 (EMS-Chemie) | 30,0 | 60,0 |
| Benzoïne | | 2,0 | 2,0 |
| Agent d'étalement | Byk 360-P | 6,0 | 6,0 |
| Bioxyde de Titane | RL 60 de Rhône Poulenc | 390,0 | 390,0 |

Présente les mêmes inconvénients que A.

**EXEMPLE C**

Peinture pigmentée blanche résistant à l'extérieur, à base de TGIC. Utilisation d'un agent matifiant à haute acidité.

| constituants | nom commercial | composition poudre |
|---|---|---|
| | | Parties en masse (grammes) |
| Polyester carboxylé 96/4 | REAFREE 44O1 | 540,0 |
| Triglycidylisoeyanurate | Araldite PT810 (Ciba) | 91,0 |
| Agent matifiant | XB 4957 | 53,0 |
| Benzoïne | | 2,0 |
| Agent d'étalement | Byk 360-P | 6,0 |
| Bioxyde de Titane | RL 60 de Rhône Poulenc | 328,0 |
| Accélérateur | DT 3126 | 6,0 |

La peinture présente un excellent aspect mat, une faible brillance à 60°C et 85°C, mais les propriétés mécaniques sont complètement insuffisantes.

**EXEMPLE D**

Peinture pigmentée blanche résistant à l'extérieur, à base de TGIC. (Triglycidylisocyanurate) Utilisation d'une cire matifiante.

|  | nom commercial | composition poudre |
|---|---|---|
|  |  | Parties en masse (grammes) |
| constituants |  | D |
| Polyester carboxylé 96/4 | REAFREE 44O1 | 583,0 |
| Triglycidylisocyanurate | Araldite PT810 (Ciba) | 44,0 |
| Cire matifiante | DT 3329-1 | 52,0 |
| Benzoïne |  | 2,0 |
| Agent d'étalement | Byk 360-P | 6,0 |
| Bioxyde de Titane | RL 60 de Rhône Poulenc | 313,0 |
| Accélérateur | DT 3126 | 6,0 |

L'aspect mat obtenu est insuffisant, bien que les autres propriétés soient correctes.

**EXEMPLE E**

Peinture pigmentée blanche polyuréthanne résistante à l'exterieur, à base de prépolymère, d'isophorone di-isocyanate masquée avec de ε-caprolactame pour l'extérieur.

|  | nom commercial | composition poudre |
|---|---|---|
| constituants |  | Parties en masse (grammes) |
| Polyester hydroxylé, OH = 40- 50 | REAFREE 3300 | 448,2 |
| prépolymère IPDI masqué caprolactame | Vestagon BF-1530 de HÜLS | 129,8 |
| cire micronisée | Cerafluor 961 de BYK-CERA | 20,0 |
| Benzoïne |  | 3,0 |
| Agent d'étalement | BYK 360-P de BYK-CHEMIE | 9,0 |
| Bioxyde de Titane | RL 60 de Rhône Poulenc | 290,0 |
| Baryte |  | 100,0 |

les propriétés mécaniques sont acceptables mais la matité reste faible.

**EXEMPLE F**

Peinture en poudre blanche polyuréthanne mate pour l'extérieur.

Selon ce qui est indiqué dans la présente invention, l'utilisation d'un polyester spécial avec le prépolymère d'isocyanate indiqué permet d'obtenir des systèmes mats ayant de bonnes propriétés mécaniques et de tenue en extérieur.

| constituants | nom commercial | composition poudre N°1<br>Parties en masse (gram-mes) |
|---|---|---|
| Polyester hydroxylé, OH : 40-50 | REAFREE 7000 | 502,0 |
| prépolymère "trimère" HDI masqué parahydroxy-benzoate de méthyle | Tolonate® HDT masqué parahydroxy-benzoate de méthyle | 76.0 |
| Cire micronisée | CEREFLUOR (BYK 961°) | 20,0 |
| Benzoïne | | 3,0 |
| Agent de nivellement | Byk 360-P | 9,0 |
| Bioxyde de Titane | RL 60 de Rhône Poulenc | 290,0 |
| Baryte | | 100,0 |

**EXEMPLE G**

Exemple croisé dans lequel on utilise l'ester de l'exemple F avec l'isocyanate de l'exemple E

| constituants | nom commercial | composition poudre N°1<br>Parties en masse (gram-mes) |
|---|---|---|
| Polyester hydroxylé, OH : 40-50 | REAFREE 7000 | 448,2 |
| prépolyrnère IPDI Masqué caprolactame | Vestagon BF-1530. de HÜLS | 129,8 |
| Cire micronisée | Cerafluor 961 de BYK-CERA | 20,0 |
| Benzoïne | | 3,0 |
| Agent d'étalement | BYK 360-P de BYK-CHEMIE | 9,0 |
| Bioxyde de Titane | RL 60 de Rhône Poulenc | 290,0 |
| Baryte | | 100,0 |

TABLEAU 1

| Peinture | Exemple A | Exemple B | Exemple C | Exemple D | Exemple E | Exemple F | Exemple G |
|---|---|---|---|---|---|---|---|
| Durcissement | 12' 200°C | 15' 200°C | 12' 200°C | 12' 200°C | 15' 200°C | 15' 200°C | 15' 200°C |
| Brillance 20° | 5,8 | 9,0 | 1,9 | 9,5 | 52 | 7,2 | 24 |
| Brillance 60° | 26,5 | 34,3 | 4,5 | 42,9 | 71," | 29,9 | 63 |
| Brillance 85° | 27,8 | 32,8 | 15,9 | 59,8 | 99 | 34,4 | 90 |
| Impact direct (cm) | 75 | 75 | 20 | 75 | 75 | 75 | 75 |
| Impact inverse | 75 | 75 | 0 | 75 | 75 | 75 | 75 |
| Adhérence | 100 | 100 | 100 | 100 | 100 | 100 | 100 |
| Pliage (mandrin conique) (%) | 100 | 100 | 100 | 100 | 100 | 100 | 100 |
| Résistance à la méthyl-éthylcétone (butanone) (Double passage) | > 200 | > 200 | 40 | > 200 | > 200 | > 200 | > 200 |
| Tenue en extérieur | Excellente | Excellente | Bonne | Excellent | Excellente | Excellente | Excellente |

**Revendications**

1.  Composition caractérisée par le fait qu'elle comporte pour addition successive ou simultanée:

    → un isocyanate au moins partiellement masqué présentant une température de transition vitreuse (parfois désignée par l'abréviation anglo-saxonne Tg) d'au moins 20°C, avantageusement d'au moins 40°C) et un taux de libération (vis à vis de l'agent masquant) à 120°C d'au plus 5%;

    → un polyol présentant les caractéristiques suivantes:

    ♦ une température de transition vitreuse (parfois désignée par l'abréviation anglo-saxonne Tg) au moins égal à environ 40°C, avantageusement au moins égal à environ 50°C,
    ♦ un indice d'hydroxyle au moins égal à environ 10 mg/g, avantageusement au moins égal à environ 15 mg/g,
    ♦ une masse moléculaire moyenne Mn au mois égale à environ 1000, avantageusement à 2000 g/ mole.

2.  Composition selon la revendication 1, caractérisée par le fait que l'isocyanate est avantageusement masqué par un groupe masquant portant au moins une fonction ester.

3.  Composition selon les revendications 1 et 2, caractérisée par le fait que l'indice d'hydroxyle dudit polyol peut varier entre 10 et 350 mg. KOH/g, de préférence entre 15 et 80.

4.  Composition selon les revendications 1 à 3, caractérisée par le fait que l'indice d'acidité est au plus égal à 20 mg. KOH/g, compris de préférence entre 3 et 15 mg. KOH/g.

5.  Composition selon les revendications 1 à 4, caractérisée par le fait que la masse moléculaire moyenne Mn, du liant ou polymère hydroxylé de la présente invention varie entre 2000 et 15000 g/mo.

6.  Composition selon les revendications 1 à 5, caractérisée par le fait que après mélange, la composition est mise sous forme de poudre.

7.  Composition selon la revendication 6, caractérisée par le fait que que la poudre présente un $d_{90}$ au plus égal à environ 200 micromètres avantageusement à 100 micromètres.

8.  Composition selon les revendications 6 et 7, caractérisée par le fait que la poudre présente un $d_{10}$ au moins égale à environ 20 micromètres avantageusement à environ 50 micromètres.

9.  Composition selon les revendications 1 à 8, caractérisée par le fait qu'elle comporte en outre du bioxyde de titane.

10. Utilisation de la composition selon les revendications 1 à 9, pour les revêtements et notamment pour la peinture.

11. Revêtement obtenu par l'utilisation de la composition selon les revendications 1 à 9.

Office européen
des brevets

**RAPPORT DE RECHERCHE EUROPEENNE**

Numero de la demande

EP 96 40 1703

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 680 984 (RHONE POULENC CHIMIE) 8 Novembre 1995<br>* revendications 1-17,24,25 *<br>* page 4, ligne 27 - ligne 55 *<br>--- | 1,2,6-11 | C08G18/80<br>C09D175/04 |
| X | DE-A-33 28 131 (HUELS CHEMISCHE WERKE AG) 21 Février 1985<br>* revendications 1-5,7 *<br>* page 5, ligne 7 - page 6, ligne 28 *<br>--- | 1,3-6,<br>10,11 | |
| X | FR-A-2 266 725 (NIPPON ESTER CO LTD) 31 Octobre 1975<br>* revendications 1,2,5,6,9 *<br>* page 2, ligne 1 - ligne 32 *<br>--- | 1,10,11 | |
| X | EP-A-0 009 694 (BAYER AG) 16 Avril 1980<br>* revendications 1-3 *<br>* page 6, ligne 6 - ligne 25 *<br>* page 8, ligne 10 - page 9, ligne 13 *<br>* page 10, ligne 11 - ligne 25 *<br>--- | 1,10,11 | |
| A | US-A-3 317 463 (E. SCHONFELD ET AL.) 2 Mai 1967<br>* revendications 1-7 *<br>* colonne 2, ligne 61 - colonne 3, ligne 52 *<br>* exemples 3,4 *<br>----- | 1 | |

**DOMAINES TECHNIQUES RECHERCHES (Int.Cl.6)**

C08G

Le présent rapport a été établi pour toutes les revendications

| Lieu de la recherche | Date d'achèvement de la recherche | Examinateur |
|---|---|---|
| LA HAYE | 13 Décembre 1996 | Van Puymbroeck, M |

EPO FORM 1503 03.82 (P04C02)